Europäisches Patentamt

(19) European Patent Office

Office européen des brevets

(11) Publication number: **0 076 339**
**A1**

(12) **EUROPEAN PATENT APPLICATION**

(21) Application number: **81107940.9**

(22) Date of filing: **05.10.81**

(51) Int. Cl.³: **B 60 G 15/06**
**F 16 F 9/06**

(43) Date of publication of application:
**13.04.83 Bulletin 83/15**

(84) Designated Contracting States:
**DE FR GB**

(71) Applicant: **KAYABA KOGYO KABUSHIKI KAISHA**
Sekai Boeki Center Bldg., 4-1 2-chome Hamamatsu-cho
Minato-ku
Tokyo(JP)

(72) Inventor: **Horiyama, Osamu**
Tohzan Dorm. 5700 Dota Kani-cho
Kani-gun Gifu-ken(JP)

(72) Inventor: **Ishizu, Ikuzo**
119, Aza Nishikoken Ooaza Inuyama
Inuyama-shi Aichi-ken(JP)

(74) Representative: **Patentanwälte Grünecker, Dr.
Kinkeldey, Dr. Stockmair, Dr. Schumann, Jakob, Dr.
Bezold, Meister, Hilgers, Dr. Meyer-Plath**
Maximilianstrasse 43
D-8000 München 22(DE)

(54) **Telescopic shock absorber.**

(57) A telescopic type shock absorber (10) includes an outer tube (40, 50, 60, 70) which is larger in outside diameter at the upper section than at the lower section but smaller in wall thickness at the upper section than at the lower section. Such distributions of outside diameter and wall thickness decrease the rigidity of the outer tube (40, 50, 60, 70) from the lower end to the upper end thereof. The rigidity in the lower section is sufficient to withstand the maximum bending stresses which occur at the lower end where the tube (40, 50, 60, 70) is fixed to a knuckle spindle (14). The reduced rigidity in the upper section allows the outer tube (40, 50, 60, 70) to bend along with a piston rod (26) and reduces the frictional resistance between the piston rod (26) and a bearing (16). The outer tube (40, 50, 60, 70) defines a larger annular space for a fixed length thereof in cooperation with an inner tube (20) to reduce the compression ratio of air which is confined in the annular space.

*Fig. 2*

Croydon Printing Company Ltd.

-1-

## Background of the Invention

The present invention generally relates to a MacPherson type suspension system for a vehicle and, more particularly, to a telescopic type shock absorber for such a suspension system.

The telescopic shock absorber comprises an inner tube, a piston carried at the lower end of a piston rod and which is sealingly slidable in the inner tube and an outer tube which coaxially surrounds the inner tube and piston rod. The piston rod slides through a bearing fixed to the upper ends of the inner and outer tubes and is fixed at its upper end to a vehicle suspension. The lower end of the outer tube is fixed to a knuckle spindle for a wheel. The vehicle is supported by means of the wheel, knuckle spindle, shock absorber and suspension. The inner and outer tubes are filled with hydraulic fluid to dampen relative telescopic movement between the piston and the inner and outer tubes and thereby dampen road shocks resulting from the operation of the vehicle.

The outer tube of such a shock absorber is subjected to a substantial magnitude of bending moment in proportion to a weight of the vehicle. This bending moment is received by the relatively sliding surfaces of the inner tube and piston and those of the bearing and piston rod. Therefore, the maximum bending stress occurs at the lower end of the outer tube remotest from the bearing and where it is fixed to the knuckle spindle. Prior art telescopic shock absorbers comprise outer tubes which have uniform inner and outer diameters and wall thicknesses. The wall thickness and inner and outer diameters are selected to be sufficient to absorb the maximum bending stress in the lower portion of the outer tube.

This results in an overdesign and an increased weight of the upper portion of the outer tube which inherently does not bear any substantial bending moment and, thus, generates only a minimum of stress. Excess rigidity of the outer tube prevents the bearing and inner tube from bending along with the piston rod during operation of the vehicle. This increases the frictional resistance between the piston rod and the bearing at the upper end of the tubes, preventing smooth operation of the shock absorber.

Summary of the Invention

A telescopic type shock absorber embodying the present invention includes an inner tube, a piston carried at a lower end of a piston rod and sealingly slidable in the inner tube, an outer tube coaxially surrounding the inner tube and piston rod and carrying a knuckle spindle at a lower end thereof, and a bearing fixed to upper ends of the inner and outer tubes. The outer tube has a wall thickness which is smaller at an upper section than at a lower section and an outside diameter which is larger at the upper section than at the lower section.

In accordance with the present invention, a telescopic type shock absorber includes an outer tube which is larger in outside diameter at the upper section than at the lower section but smaller in wall thickness at the upper section than at the lower section. Such distributions of outside diameter and wall thickness decrease the rigidity of the outer tube from a lower end to an upper end thereof. The rigidity in the lower section is sufficient to withstand the maximum bending stress which occurs at the lower end where the tube is fixed to a knuckle spindle. The reduced rigidity in the upper section allows the outer tube to bend along with a piston rod and reduces the frictional resistance between the piston rod and a bearing. The outer tube defines a larger annular space for a fixed length thereof in cooperation with an inner tube to reduce the compression ratio of air which is confined in the annular space.

It is an object of the present invention to provide an improved telescopic shock absorber having an outer tube which features reduced internal friction and wear and a reduced weight.

It is another object of the present invention to provide an improved telescopic shock absorber which is excellent in its shock absorbing operation by defining a larger space for air between outer and inner tubes for a fixed available length of the outer tube.

It is another object of the present invention to provide a generally improved telescopic shock absorber.

Other objects, together with the foregoing, are attained in the embodiments described in the following description and illustrated in the accompanying drawing.

Brief Description of the Drawing

Figure 1 is a sectional view of a prior art telescopic shock absorber; and

Figures 2 to 5 are fragmentary sections which are similar to each other but showing first to fourth embodiments of a telescopic shock absorber of the present invention, respectively.

Description of the Preferred Embodiments

While the telescopic shock absorber of the present invention is susceptible of numerous physical embodiments, depending upon the environment and requirements of use, substantial numbers of the herein shown and described embodiments have been made, tested and used, and all have performed in an eminently satisfactory manner.

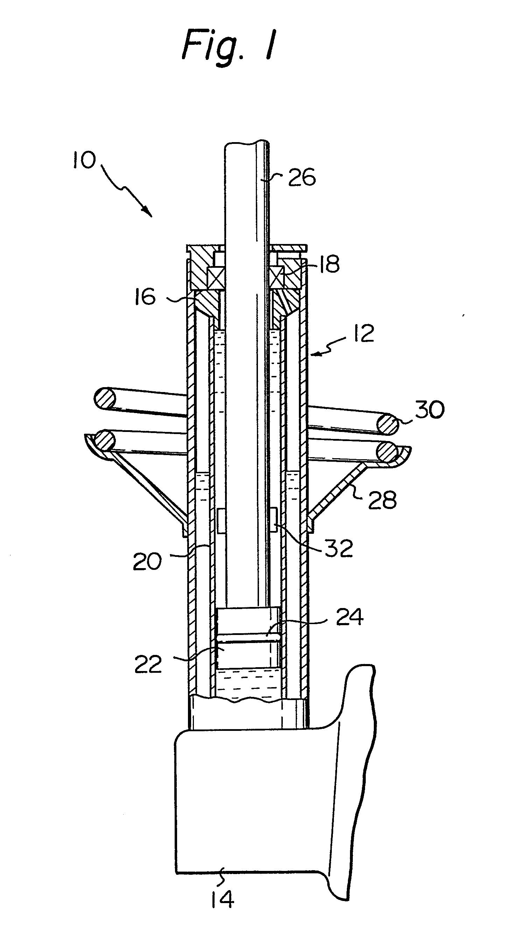

Referring now to Figure 1 of the drawing, a prior art telescopic type shock absorber is generally designated by the reference numeral 10 and comprises an outer tube 12. The lower end of the outer tube 12 is fixedly connected to a knuckle spindle 14 which, although not shown, rotatably supports a wheel of a vehicle. A bearing 16 and an oil seal 18 are provided at the upper end of the outer tube 12.

An inner tube 20 is fixed in place inside the outer tube 12 in a coaxial manner and a piston 22 is slidable in the inner tube 20. An annular seal 24 is provided to the piston 22 for sealing engagement with the inner wall of the inner tube 20. The annular space between the tubes 12 and 20 and the interior of the tube 20 below the piston 22 communicate with each other through holes (not shown) and these spaces are filled with hydraulic fluid or oil except for an upper part of the space between the tubes 12 and 20 which is filled with air. The piston 22 is further provided with a valve (not shown) to dampen movement of the piston 22 and the tube 20.

The shock absorber 10 further comprises a piston rod 26 which extends upwardly from the piston 22 through the bearing 16 and seal 18 and is connected to a suspension of the vehicle through a resilient rubber bushing (not shown). Further illustrated are a spring seat 28 and a coil suspension spring 30 which is operatively mounted between the spring seat 28 and the suspension. A stop 32 is fixed to the piston rod 26 to prevent overextension of the shock absorber 10 through abutment with the lower end of the bearing 16.

Upon contraction of the shock absorber 10, the piston rod 26 strokes downward relative to the inner tube 20 to cause a smooth inflow of a part of the hydraulic fluid from the contracting space in the inner tube 20 below the piston 22 into the expanding space above the piston 22. At the same time, the rest or surplus of the fluid is forced into the annular space between the tubes 12 and 20.

Upon expansion of the shock absorber 10, the piston rod 26 strokes upward relative to the inner tube 20 so that the fluid in the space inside the tube 20 above the piston 22 is forced down into the space below the piston 22 under a resistance imparted thereto by the valve provided to the piston 22. A short volume of the fluid is supplemented from the annular space between the tubes 12 and 20.

The prior art shock absorber 10 cannot avoid the previously discussed drawbacks due to the inherent structure of the outer tube 12 described hereinabove.

Throughout the drawing Figures which will be described hereinbelow, parts and elements common to those of Figure 1 will be omitted with only unique outer tube configurations illustrated.

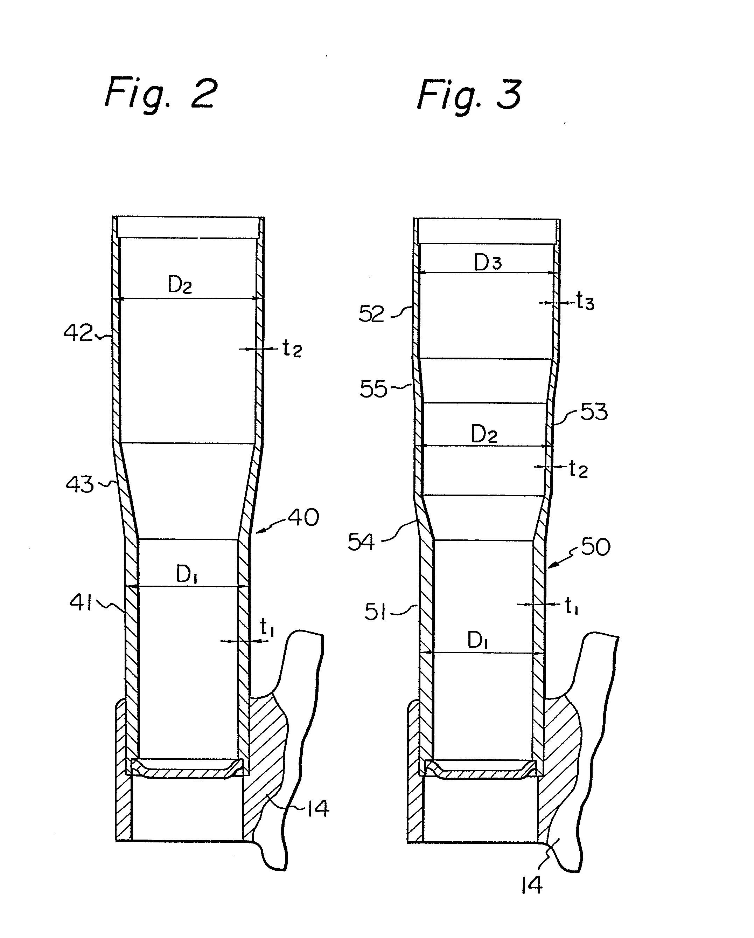

Referring to Figure 2, the outer tube 40 comprises a lower portion 41, an upper portion 42 and a downwardly tapered connecting portion 43 which spans between the lower and upper portions 41 and 42. The lower portion 41 has an outside diameter $D_1$ smaller than the outside diameter $D_2$ of the upper portion 42 but a wall thickness $t_1$ larger than the wall thickness $t_2$ of the upper portion 42. The tapered connecting portion 43 has a wall thickness which decreases progressively in an upward direction until it merges into the thickness $t_2$ of the thinner portion 42.

Thus, the rigidity of the outer tube 40 is the largest at the junction of the outer tube 40 and knuckle spindle 14 but is decreased progressively therefrom to the upper end of the tube 40. Such a rigidity distribution absorbs the bending stress throughout the length of the tube 40 which is the maximum at the junction of the tube 40 and knuckle spindle 14. This reduces the weight of the outer tube 40 while ensuring smooth movement of the piston rod 26 by allowing the sliding portions of the tube 40 to well follow bending of the piston rod 6. The decrease in the weight of the tube 40 offers a decrease in the unsprung weight of the vehicle which in turn improves the road holding ability of the vehicle and the dampening efficiency of the shock absorber. Additionally, a larger volume of annular space is available between the uniquely shaped outer tube 40 and inner tube 20 for a predetermined length of the tube 40. This suppresses the compression ratio of air inside the annular space upon a downward stroke of the piston rod 26 and thereby promotes efficient shock absorbing actions.

Figure 3 illustrates another outer tube 50 embodying the present invention which comprises an intermediate portion 53 in addition to a lower portion 51 and an upper portion 52. The wall thickness of the tube 50 is the largest $t_1$ at the lower portion 51, medium $t_2$ at the intermediate portion 53 and smallest $t_3$ at the upper portion 52. Conversely, the outside diameter of the tube 50 is the smallest $D_1$ at the lower portion 51, medium $D_2$ at the intermediate portion 53 and largest $D_3$ at the upper portion 52. The portions 51 and 53 are connected together by a downwardly tapered connecting portion 54 while the portions 52 and 53 are interconnected by a second downwardly tapered connecting portion 55.

It will be apparent to those skilled in this art that four, five or even more such evenly thick portions may be interconnected by successive tapered portions if desired without any detriment to the effects previously discussed.

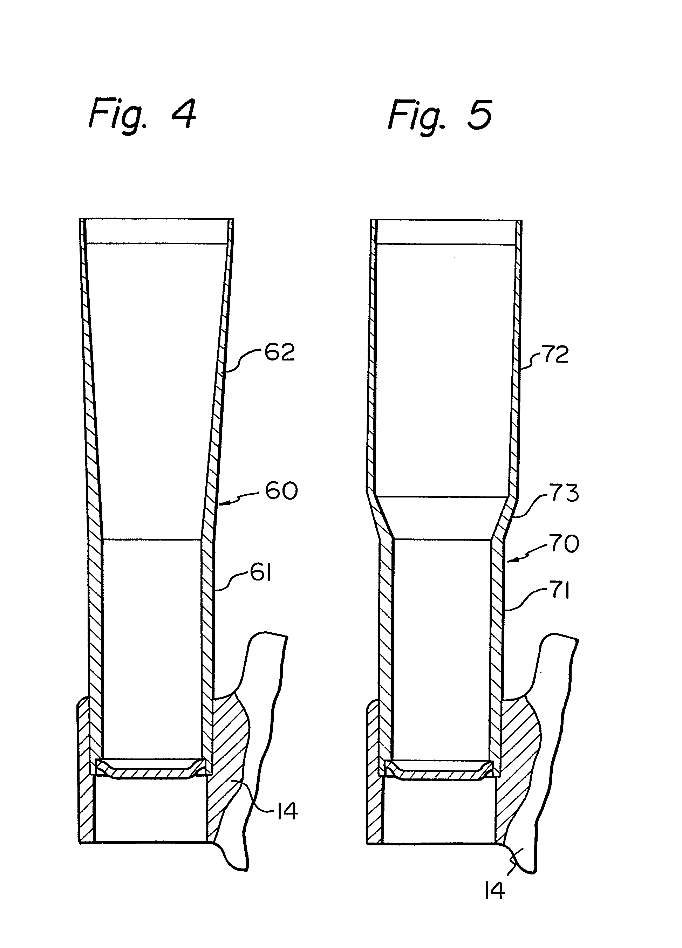

Figure 4 illustrates another outer tube 60 embodying the present invention which comprises a lower portion 61 and an upper portion 62. This tube 60 has a wall thickness which decreases continuously from the junction of the lower and upper portions 61 and 62 to the end of the upper portion 62, and an outside diameter which increases also continuously from said junction to said end of the upper portion 62.

Figure 5 illustrates still another outer tube 70 embodying the present invention which comprises a lower portion 71, an upper portion 72 and a downwardly tapered connecting portion 73. In this case, not only the connecting portion 73 but the upper portion 72 are tapered downwardly such that the outside diameter of the tube 70 increases continuously in an upward direction and the wall thickness decreases also continuously in the same direction.

In summary, it will be seen that the present invention provides a telescopic shock absorber which is light weight and operable in a desirable manner. Various modifications will become possible for those skilled in the art after receiving the teachings of the present disclosure without departing from the scope thereof.

WHAT IS CLAIMED IS:

1. A telescopic type shock absorber including an inner tube, a piston carried at a lower end of a piston rod and sealingly slidable in the inner tube, an outer tube coaxially surrounding the inner tube and piston rod and carrying a knuckle spindle at a lower end thereof, and a bearing fixed to upper ends of the inner and outer tubes, the outer tube having a wall thickness which is smaller at an upper section than at a lower section and an outside diameter which is larger at the upper section than at the lower section.

2. A shock absorber as in claim 1, in which the larger outside diameter and smaller wall thickness at the upper section of the outer tube merge into the smaller outside diameter and larger wall thickness individually in a stepwise manner.

3. A shock absorber as in claim 1, in which the larger outside diameter and smaller wall thickness at the upper section of the outer tube merge into the smaller outside diameter and larger wall thickness individually in a substantially stepless or continuous manner.

4. A shock absorber as in claim 1, in which a third section intervenes between the upper and lower sections and has an outside diameter smaller than that of the upper section but larger than that of the lower section and a wall thickness larger than that of the upper section but smaller than that of the lower section.

5. A shock absorber as in claim 1, in which the outer tube includes a downwardly tapered upper section having a wall thickness which increases continuously in a downward direction and an outside diameter which decreases continuously in said direction.

Fig. 1

Fig. 2

Fig. 3

Fig. 4

Fig. 5

62

60

61

14

72

73

70

71

14

## DOCUMENTS CONSIDERED TO BE RELEVANT

| Category | Citation of document with indication, where appropriate, of relevant passages | Relevant to claim |
|---|---|---|
| X | <u>GB - A - 1 153 235</u> (REICHE)<br><br>* the entire document * | 1-5 |
| Y | <u>GB - A - 753 369</u> (GIRLING)<br><br>* page 2, lines 28-33; figure 2 * | 1,3,5 |
| Y | <u>DE - A - 2 524 971</u> (BOGE)<br><br>* page 4, paragraphe 3; figure 2* | 1,2 |
| A | <u>GB - A - 2 050 561</u> (KAYABA KOGYO KABUSHIKI)<br><br>* the entire document * | 1,2 |
| A | <u>EP - A - 0 027 163</u> (BOGE)<br><br>* figure 1 * | 1,2 |
| A | <u>EP - A - 0 023 282</u> (KAYABA KOGYO KABUSHIKI)<br><br>* the entire document * | 2-5 |
| A | <u>DE - U - 1 953 486</u> (BMW)<br><br>* abstract * | 1,2 |
| A | <u>FR - A - 422 167</u> (POURENC)<br>./. | |

CLASSIFICATION OF THE APPLICATION (Int. Cl. ³)

B 60 G 15/06
F 16 F 9/06

TECHNICAL FIELDS SEARCHED (Int.Cl.³)

B 60 G 13/00
        15/00
F 16 F  9/00
        13/00

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

The present search report has been drawn up for all claims

| Place of search | Date of completion of the search | Examiner |
|---|---|---|
| The Hague | 04-06-1982 | ESPEEL |

EPO Form 1503.1 06.78

European Patent
Office

**EUROPEAN SEARCH REPORT**

0076339

Application number:

EP 81 10 7940

-2-

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | * figure 2 * | 1,2 | |
| | -- | | |
| E,P | EP - A - 0 041 342 (LUCAS) | | |
| | * page 3, paragraph 2 to page 4, paragraph 4; pages 8 and 9; figures 1,4,5 * | 1,2 | |
| | -- | | |
| A | GB - A - 1 145 942 (ARMSTRONG) | | **TECHNICAL FIELDS SEARCHED (Int. Cl.³)** |
| | ------------- | | |